# EUROPÄISCHE PATENTSCHRIFT

(11) **EP 0 726 450 B1**
(45) Veröffentlichungstag und Bekanntmachung des Hinweises auf die Patenterteilung: **04.12.2002**
(21) Anmeldenummer: 96100864.6
(22) Anmeldetag: 23.01.1996
(51) Int. Cl.: G01K 3/06, G01K 13/02

(54) **Temperaturfühleranordnung**
Temperature sensing device
Dispositif à capteur de température

(30) Priorität: 11.02.1995 DE 19504572
(43) Veröffentlichungstag der Anmeldung: 14.08.1996
(73) Patentinhaber: Hella KG Hueck & Co., D-59538 Lippstadt (DE)
(72) Erfinder: Decius, Andreas, D-59558 Lippstadt (DE); Knittel, Otto, D-59494 Soest (DE); Lange, Ulrich Volker, D-59597 Erwitte (DE); Finke, Wilfried, 59555 Lippstadt (DE)

(56) Entgegenhaltungen:
- EP-A- 0 334 234
- DE-A- 3 843 233
- FR-A- 2 512 202
- GB-A- 2 269 902

## Beschreibung

Die Erfindung betrifft eine Temperaturfühleranordnung nach dem Oberbegriff des Anspruches 1.

Eine derartige Temperaturfühleranordnung ist aus der DE 38 43 233 C2 vorbekannt. Bei dieser vorbekannten Temperaturfühleranordnung besteht der Temperaturfühler aus einer temperaturabhängigen Widerstandspaste, die mittels Siebdruck als Dickschichtwiderstand ausgebildet ist, der in seinen Abmessungen den vollständigen repräsentativen Bereich des Luftkanals überspannt. Besonderheit dieser vorbekannten Lösung ist also die Verwendung eines räumlich ausgedehnten flächenhaften Widerstandes zum Erreichen der gewünschten räumlichen Integration über den repräsentativen Bereich.

Diese vorbekannte Temperaturfühleranordnung weist jedoch den Nachteil auf, daß hierzu ein besonders ausgebildeter und technisch nur mit großem Aufwand herstellbarer Temperaturfühler verwendet werden muß, der darüber hinaus nur für einen speziellen Luftkanal verwendbar ist. Dies schränkt die Einsatzmöglichkeiten dieser vorbekannten Temperaturfühleranordnung stark ein.

Aus der DE 31 34 166 C2 ist zwar eine Temperaturfühleranordnung vorbekannt, bei der ein handelsüblicher nahezu punktförmig messender Temperaturfühler verwendet wird. Bei dem dort verwendeten Temperaturfühler handelt es sich um ein bedrahtetes Bauteil, dessen elektrische Anschlußdrähte mit Kontaktflächen verbunden sind, die im Verbindungsbereich mit den Anschlußdrähten des Temperatursensors zu Temperatursensorflächen vergrößert sind. Der Grundgedanke einer räumlich integrierenden Temperaturmessung ist jedoch bei dieser vorbekannten Lösung nicht erkannt, denn die dort verwendeten vergrößerten Anschlußflächen überspannen nicht den vollen repräsentativen Bereich im Luftstrom des Luftkanals, so daß eine gewünschte räumlich nahezu vollständige Integration nicht erreicht wird. Ferner sind handelsübliche Kupferschichten auf Leiterplatten im Bereich von 50 ... 70 µm zu dünn, um aus größeren Entfernungen Temperaturen zum Fühlerelement zu leiten. Darüber hinaus wird ein bedrahtetes Bauelement verwendet, das vergleichsweise große räumliche Abmessungen aufweist, wobei auch eine Wärmeerfassung über die Anschlußdrähte erfolgt.

Die EP-A 0 332 434 zeigt eine Temperaturfühleranordnung für Klimaanlagen von Kraftfahrzeugen mit einem bedrahteten Bauelement als Temperaturfühler, der durch einen nachgeschalteten Belüftungsmotor belüftet wird. Der Temperaturfühler weist geringe Außenabmessungen auf und ist im Zentrum des zylindrischen Belüftungskanals angeordnet. Es sind keine wärmeleitenden Bereiche außerhalb des Temperaturfühlers vorgesehen.

Die GB-A 22 69 902 zeigt einen Temperaturfühler mit einem bedrahteten temperaturempfindlichen Element, dass in einem Rohr angeordnet ist, welches mit einem schlecht leitenden Füllmaterial gefüllt ist. Dieses Rohr ist im Querschnitt einer Wasserleitung angeordnet und soll die Wärme des gesamten Querschnittes auf den Temperaturfühler leiten. Die wärmeleitenden Bereiche sind also von den elektrischen Anschlußbereichen getrennt.

Die vorliegende Erfindung hat die Aufgabe, eine Temperaturfühleranordnung zu schaffen, die mit geringem fertigungstechnischen Aufwand bei einfacher Anpassung an die repräsentativen Bereiche unterschiedlicher Luftkanäle unter Verwendung handelsüblicher Temperaturfühler eine möglichst wirkungsvolle räumlich integrierende Messung von Lufttemperaturen in einem Luftkanal ermöglicht.

Diese Aufgabe wird erfindungsgemäß durch die kennzeichnenden Merkmale des Anspruchs 1 gelöst.

Dadurch, daß der verwendete Temperaturfühler im Verhältnis zum repräsentativen Bereich des Luftstroms kleine Außenabmessungen aufweist, wird ein handelsüblicher Temperaturfühler, ausgeführt als ein oberflächenmontierbares Bauelement in SMD-Technik, wie zum Beispiel ein temperaturabhängiger Widerstand, verwendet. Derartige SMD-Widerstände weisen nur noch Außenabmessungen in der Größenordnung von etwa 1 bis 4 mm auf, so daß mit diesen Temperaturfühlern nur eine quasi punktförmige Messung von Temperaturen möglich ist. Andererseits sind diese Temperaturfühler als handelsübliche Bauteile einfach und kostengünstig zu beschaffen und durch industrielle Massenlötvorgänge einfach und kostengünstig mit anderen Teilen elektrisch verbindbar.

Derartige Temperaturfühler weisen auch die beanspruchten wärmeleitenden Anschlußbereiche auf, über die eine Wärmeübertragung von der Umgebung auf die Temperaturfühler wesentlich wirkungsvoller erfolgen kann, da die Anschlußbereiche flächig ausgebildet sind. Dies wird erfindungsgemäß dadurch ausgenutzt, daß mindestens einer dieser Anschlußbereiche wärmeleitend mit mindestens einem wärmeaufnehmenden und wärmeleitenden Körper flächig verbunden ist. Die Abmessungen des Körpers überspannen dabei im wesentlichen den repräsentativen Bereich, um die gewünschte räumlich integrierende Messung der Lufttemperatur im Luftstrom des Luftkanals zu gewährleisten.

Mittels des/der beanspruchten wärmeaufnehmenden und wärmeleitenden Körper(s) wird also der räumliche Meßbereich des nahezu punktförmig messenden handelsüblichen Temperaturfühlers auf den repräsentativen Bereich des Luftstromes erweitert. Hierzu ist oder sind allein ein oder zwei derartiger) wärmeaufnehmende(r) und wärmeleitende(r) Körper erforderlich. Als Temperaturfühler wird, wie vorher bereits erläutert, ein handelsübliches temperaturabhängiges Widerstandsbauteil verwendet, das selbst nicht zur direkten Erfassung der Lufttemperatur beitragen muß.

Durch diese erfindungsgemäßen Maßnahmen wird eine Temperaturfühleranordnung geschaffen, die aufgrund der Verwendung weitgehend handelsüblicher Standardbauteile sehr einfach und kostengünstig herstellbar ist. Dabei kann auch für verschiedene Temperaturfühleranordnungen derselbe Temperaturfühler verwendet werden, wobei zur Anpassung der Abmessungen der Temperaturfühleranordnung an den jeweiligen repräsentativen Bereich allein die Anpassung des verwendeten wärmeaufnehmenden und wärmeleitenden Körpers erforderlich ist.

Die wärmeleitenden Anschlußbereiche sind zugleich die elektrisch leitenden Anschlußbereiche des verwendeten elektrischen Temperaturfühlers, wobei die ansonsten möglicherweise unerwünschte Wärmekopplung des Temperaturfühlers über die elektrischen Anschlußbereiche an die Umgebung hier für die Ziele der vorliegenden Erfindung ausgenutzt wird.

Vorteilhafte Ausgestaltungen und Weiterbildungen der erfindungsgemäßen Temperaturfühleranordnung ergeben sich aus den Merkmalen der Unteransprüche. Die nachfolgend anhand eines wärmeaufnehmenden und wärmeleitenden Körpers diskutierten vorteilhaften Merkmale können sich selbstverständlich genauso auf eine Anordnung gemäß des Hauptanspruchs beziehen, welche zwei wärmeaufnehmende und wärmeleitende Körper aufweist.

Der wärmeaufnehmende und wärmeleitende Körper kann besonders vorteilhaft ein Metallblech sein, da Metall einerseits die gewünschten wärmeaufnehmenden und wärmeleitenden Eigenschaften hat. Andererseits ist die Verwendung von Blechen vorteilhaft, weil ihr Verhältnis von Oberfläche zu Volumen groß ist, was eine schnelle Reaktion der Temperaturfühleranordnung auf Temperaturänderungen im Luftstrom gewährleistet.

Um der im jeweils vorliegenden Anwendungsfall unterschiedlichen Strähnigkeit des Luftstromes hinsichtlich Temperatur und Luftgeschwindigkeit konkret Rechnung tragen zu können, ist es besonders vorteilhaft, wenn der wärmeleitende Körper in Richtung des Luftstromes eine von der Strömungsgeschwindigkeit und der Temperatur über die Abmessung des repräsentativen Bereichs veränderliche Tiefe aufweist. Um Wärmeverluste der Wärmeleitung auf dem Wege der aufgenommenen Wärme zu dem Temperaturfühler zu kompensieren, ist es besonders vorteilhaft, wenn der wärmeleitende Körper eine in Richtung des Luftstroms mit der Entfernung vom Temperaturfühler zunehmende Tiefe aufweist. Dabei wird davon ausgegangen, daß der Körper mit einer schmalen Stirnseite im Luftstrom angeordnet ist, um Strömungsverluste in dem Luftkanal nach Möglichkeit zu vermeiden. In diesem Zusammenhang kann die Tiefe des wärmeleitenden Körpers gegenüber der Entfernung vom Temperaturfühler überproportional zunehmen, damit Temperaturänderungen in großer Entfernung am Temperaturfühler einen ebenso großen Signalhub erzeugen wie gleiche Temperaturänderungen in der Nähe des Temperaturfühlers.

Der wärmeleitende Körper kann erfindungsgemäß zugleich Träger der Temperaturfühleranordnung sein. Dabei ist besonders vorteilhaftes, wenn als Körper ein in sich tragendes und ausreichend stabiles Metallblech verwendet wird, um dabei die Außenabmessungen des Metallbleches in bezogen auf den Anwendungsfall erträglichen Grenzen zu halten. Weiterhin ist von Vorteil, wenn das Metallblech teilweise abgewinkelt ist.

Der Körper kann auch besonders vorteilhaft gemeinsam mit dem Temperaturfühler auf einem separaten elektrisch und thermisch isolierenden Träger angeordnet sein. Die wärmeisolierende Eigenschaft des Trägers soll dabei unerwünschte Übertragungen von Temperatureinflüssen, beispielsweise von Gehäusebauteilen, auf den eigentlichen Temperaturfühler vermeiden. Die elektrische Isolation des verwendeten separaten Trägers soll einem möglichen Kurzschluß zwischen den elektrischen Anschlußteilen des Temperaturfühlers vorbeugen. In diesem Zusammenhang kann ebenfalls zur Vermeidung der Übertragung fremder Wärme auf den Temperaturfühler der Träger auf der vom Körper und Temperaturfühler abgewandten Seite elektrische Anschlußflächen für den Temperaturfühler aufweisen. Mit diesen Maßnahmen blockt die Wärmeisolation des separaten Trägers Temperatureinflüsse auf den Temperaturfühler weitgehend ab.

Insbesondere dann, wenn, wie vorher beschrieben, die elektrischen Anschlußflächen auf der vom Temperaturfühler abgewandten Seite des Trägers angeordnet sind, kann vorteilhaft auf dieser selben Seite eine elektrische Anschlußverdrahtung für den Temperaturfühler vorgesehen werden. Auch hier wird die Temperaturisolation durch den separaten Träger wirksam. Der Träger kann eine Zwischenanschlußfläche aufweisen, so daß die Drahtlängen der Anschlußverdrahtung gleich sind. Mit diesen Maßnahmen kann insbesondere ein ungleichmäßiger Fremdtemperatureinfluß auf die verschiedenen wärmeempfindlichen Anschlußbereiche des Temperaturfühlers vermieden werden.

Um geringe letztlich unvermeidbare Wärmeübertragungen von Fremdwärme durch die eigentliche Nutzwärme soweit wie möglich zu überdecken, ist es weiterhin besonders vorteilhaft, wenn der Träger auf der vom Körper und Temperaturfühler abgewandten Seite mindestens einen zweiten wärmeleitenden oder wärmeaufnehmenden Körper aufweist, dessen Abmessungen den Abmessungen des ersten Körpers entsprechen. Durch diese Maßnahme wird der Meßeffekt hinsichtlich des Nutzsignals gegenüber den Störungen durch Fremdwärme weiter erhöht, was letztendlich der durchzuführenden Temperaturmessung zugute kommt. Vorteilhaft werden beide Körper an mehreren Punkten wärmeleitend miteinander verbunden.

Der Träger kann vorteilhaft aus Leiterplattenbasismaterial, insbesondere glasfaserverstärktem Epoxydharz bestehen, wobei das Metallblech des Körpers eine insbesondere 0,4 mm starke Kupferkaschierung des Trägers ist. Mit diesen Maßnahmen wird die erfindungsgemäße Temperaturfühleranordnung quasi als Leiterplatte aufgebaut, auf die gegebenenfalls nur der Temperaturfühler als separates Bauteil aufzulöten ist, was zu einer fertigungs- und montagetechnisch sehr einfachen Lösung führt.

Insbesondere bei der beschriebenen Ausbildung der Temperaturfühleranordnung als Leiterplattenteil kann der Träger zwischen dem Körper bzw. Temperaturfühler und den Anschlußflächen eine schlitzförmige Freimachung aufweisen. Auch diese schlitzförmige Freimachung soll die Übertragung unerwünschter Fremdwärme auf den Temperaturfühler minimieren, indem die zwar schlecht aber immerhin doch geringfügig wärmeleitenden Bereiche der Leiterplatte in ihren Abmessungen verringert werden.

Der separate Träger kann insbesondere bei Verwendung der Temperaturfühleranordnung als Innenraumtemperaturfühler in Kraftfahrzeugen durch mindestens eine zweite Freimachung als Teil einer weitere Bauelemente tragenden Leiterplatte gebildet sein. Hier wird der fertigungstechnisch günstige Grundgedanke der Leiterplattenlösung dahingehend weitergebildet, daß die erfindungsgemäß ausgebildete Temperaturfühleranordnung auf sehr einfache und kostengünstige Art und Weise als Teil einer bereits vorhandenen Leiterplatte ausgebildet wird. In diesem Zusammenhang kann ein verbleibender Leiterplattensteg zwischen der Leiterplatte der Temperaturfühleranordnung und der übrigen Leiterplatte die elektrischen Anschlußleiterbahnen des Temperaturfühlers tragen. Um in diesem Anwendungsfall den erforderlichen Luftstrom im Luftkanal zu erzeugen, kann ein elektrisch betriebener Lüfter vorgesehen sein, der in weiterer Ausbildung dieser vorteilhaften Lösung in Öffnungen der Leiterplatte lagerichtig befestigt ist.

Da bei dieser Lösung die übrigen Bauteile der Leiterplatte gegebenenfalls unerwünschte Fremdwärme erzeugen, die die Genauigkeit der Luftstromtemperaturmessung negativ beeinflussen, ist es bei dieser Ausbildung der Temperaturfühleranordnung besonders vorteilhaft, wenn weitere die zweite Freimachung umgebende Öffnungen in der Leiterplatte vorgesehen sind. Diesen weiteren Öffnungen kann dann besonders vorteilhaft ein zweiter Luftkanal zugeordnet sein, der eine weitere die Temperaturmessung genauer machende Temperaturisolierung der Temperaturfühleranordnung von der Umgebung der Leiterplatte gewährleistet.

Insbesondere bei der bereits beschriebenen Verwendung der Temperaturfühleranordnung als Innenraumtemperaturfühler in Kraftfahrzeugen, kann der Kanal als Teil einer Bedienteilblende einer elektrisch geregelten Heizungs- und Klimaanlage ausgebildet sein, so daß ohne weiteren elektrischen Isolationsaufwand die Temperaturfühleranordnung Teil des Bedienteiles ist.

Zum Schutz des Temperaturfühlers vor mechanischen Einflüssen kann eine elektrisch isolierende Abdeckung, insbesondere mit einem Lacktropfen, vorgesehen werden. Ebenfalls ist es möglich, die gesamte Temperaturfühleranordnung mit einer elektrisch isolierenden, aber thermisch möglichst gut leitenden Schutzschicht, insbesondere einem Tauchlack, zu überdecken. Diese Maßnahme dient ebenfalls dem Schutz der Temperaturfühleranordnung vor unerwünschten mechanischen Einflüssen.

Insbesondere bei sehr großen Luftkanalquerschnitten und/oder sehr unregelmäßiger Form des gesamten Querschnitts des Kanals kann es vorteilhaft sein, wenn die Temperaturfühleranordnung entweder mehrere Temperaturfühler aufweist oder statt dessen mehrere Temperaturfühleranordnungen in diesem unregelmäßigen Luftkanalquerschnitt angeordnet werden.

Durch die den Luftkanal durchströmende Luft kann die verwendete Temperaturfühleranordnung prinzipiell in Schwingungen versetzt werden oder auch in einer Richtung senkrecht zur Ausdehnung der Trägerplatte, beispielsweise mit einem Staudruck, belastet werden, was infolge einer möglichen Durchbiegung des Trägers zu mechanischen Spannungen am Temperaturfühler führen kann. Diese mechanischen Spannungen können prinzipiell zur Ablösung des Temperaturfühlers von dem Träger führen, was unerwünscht ist. Deshalb ist es besonders vorteilhaft, Entlastungsbohrungen oder -schlitze im Träger, insbesondere quer zur Längsachse des Trägers, nahe bei dem Temperaturfühler vorzusehen.

Ausführungsbeispiele der erfindungsgemäßen Temperaturfühleranordnung sind in den Zeichnungen dargestellt und werden im folgenden anhand der Zeichnungen näher erläutert.

Es zeigen
- Figur 1: die Vorderseite einer Temperaturfühleranordnung;
- Figur 2: die Rückseite der Temperaturfühleranordnung nach Figur 1;
- Figur 3: eine andere Ausbildung der Temperaturfühleranordnung mit zwei Körpern;
- Figur 4: einen separaten Träger mit einer weiteren Ausbildung zweier Körper;
- Figur 5: einen weiteren Träger mit einer geometrisch anderen Ausbildung der Körper als in Figur 4;
- Figur 6: eine Temperaturfühleranordnung, bei der der Körper zugleich Träger des Temperaturfühlers ist;
- Figur 7: eine Draufsicht auf eine weitere Temperaturfühleranordnung mit einer Kombination aus Körper als separatem Bauteil und einem Körper als Kupferkaschierung ausgebildet;
- Figur 8: eine Seitenansicht auf einen Teilschnitt der Temperaturfühleranordnung gemäß Figur 7;
- Figur 9: eine Draufsicht auf eine Leiterplattenanordnung, deren Leiterplatte die Temperaturfühleranordnung als Teil aufweist und
- Figur 10: die Rückansicht der Leiterplatte gemäß Figur 9.

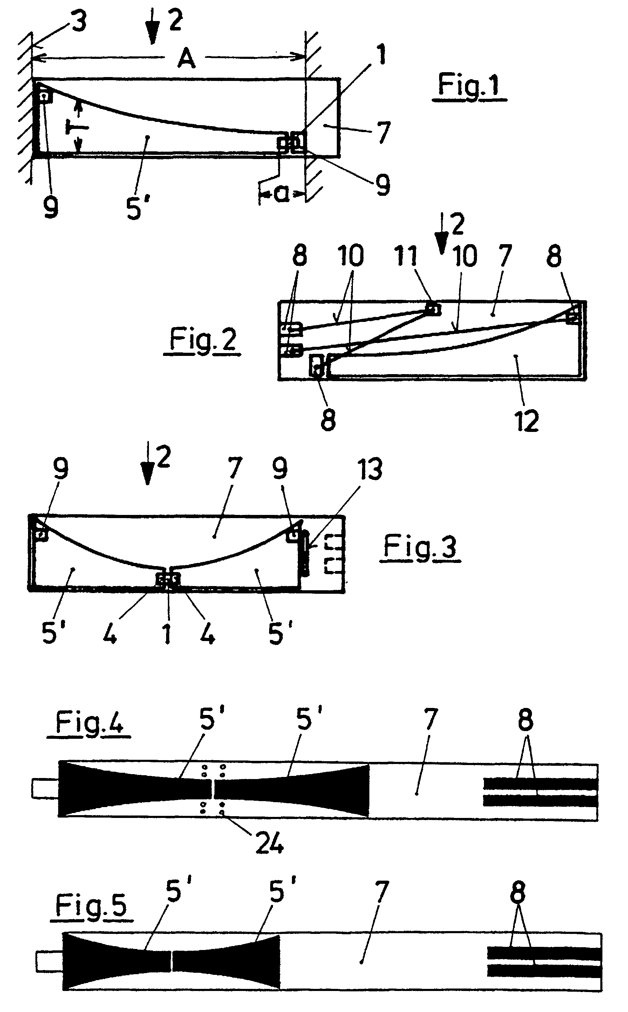

In den Figuren 1 bis 5 ist ein Temperaturfühler (1) als oberflächenmontierbarer temperaturabhängiger Widerstand in SMD-Technik ausgebildet. Dieser Temperaturfühler (1) weist gemeinsame elektrische und wärmeleitende Anschlußbereiche (4) auf, die durch eine Lötverbindung oder eine leitfähige Klebeverbindung, die ebenfalls gut wärmeleitende neben den bekannten elektrisch leitenden Eigenschaften aufweisen, mit Körpern (5) verbunden sind, die in diesen Ausführungsbeispielen als Kupferkaschierung (5') mit einer Dicke der Kaschierung von 0,4 mm ausgebildet sind.

Diese Kupferkaschierung ist auf einem separaten Träger (7) aus glasfaserverstärktem Epoxydharz aufgebracht. Dieser separate Träger (7) ist in dem Luftstrom (2) eines Luftkanales (3) derart angeordnet, daß er die Abmessungen des repräsentativen Bereichs (A), dessen Lufttemperatur gemessen werden soll, voll überspannt. Ebenso überspannen die in den genannten Figuren vorgesehenen Körper (5) diese Abmessung des repräsentativen Bereichs (A) im wesentlichen.

Wie aus den Figuren 1 bis 3 hervorgeht, ist der Luftstrom (2) auf die Stirnseite des flachen Trägers (7) gerichtet, um Strömungsverluste im Luftkanal (3) möglichst zu vermindern.

Der Träger (7) weist neben der Kupferkaschierung (5') der wärmeleitenden und wärmeaufnehmenden Körper (5), wie aus der Figur 1 und Figur 3 ersichtlich, Durchkontaktierungen (9) auf, die mit elektrischen Anschlußflächen (8) auf der Rückseite des Trägers (7) gemäß Figur 2 elektrisch leitend verbunden sind. Ebenso ist auf der Rückseite des Trägers (7) eine elektrische Anschlußverdrahtung (10) zur elektrischen Kontaktierung des Temperaturfühlers (1) mit zum Beispiel einer in den Figuren nicht dargestellten elektrischen oder elektronischen Heizungs- oder Klimasteuerung eines Kraftfahrzeuges verbunden.

Um den unerwünschten Einfluß von Fremdtemperaturen, beispielsweise vom Gehäuse des Luftkanals auf den Temperaturfühler (1), bei der Lufttemperaturmessung zu vermeiden, erfolgt die Anordnung der elektrischen Anschlußflächen (8) und der elektrischen Anschlußverdrahtung (10) auf der Rückseite, und damit auf der vom Temperaturfühler (1) abgewandten Seite des separaten Trägers (7). Um in Weiterbildung dieses Gedankens den unvermeidlichen geringfügigen Einfluß von Fremdwärme auf den Temperaturfühler zu kompensieren, weist die Rückseite des Trägers (7) zusätzlich eine Zwischenanschlußfläche (11) auf, über die eine Hälfte der elektrischen Anschlußverdrahtung (10) derart geführt ist, daß die Länge der elektrischen Anschlußverdrahtung für beide Pole des Temperaturfühlers (1) gleich ist.

Ebenfalls auf der vom Temperaturfühler (1) abgewandten Seite des Trägers (7) ist ein zweiter wärmeaufnehmender und wärmeleitender Körper (12) vorgesehen, dessen Konturen den Konturen des ersten wärmeaufnehmenden und wärmeleitenden Körpers (5) entsprechen. Demzufolge nimmt der zweite Körper dieselbe Temperatur auch örtlich gesehen an wie der erste Körper (5), was letztlich zu einer Erhöhung des Nutzsignals hinsichtlich der Luftwärmemessung gegenüber dem unerwünschten Fremdsignal durch Fremdtemperatureinflüsse führt und die Genauigkeit der Temperaturmessung erhöht.

Zwischen dem Temperaturfühler (1) bzw. den Körpern (5) und den elektrischen Anschlußflächen (8), die letztlich den Anschluß an andere Teile der Heizungsanlage ermöglichen, ist eine schlitzförmige Freimachung (13) in dem Epoxydharz-Material des Trägers (7) vorgesehen, um auch hiermit den Einfluß von Fremdwärme auf die Temperaturmeßanordnung zu verringern.

Wie aus den Figuren 1 bis 5 hervorgeht, sind die Außenabmessungen (a) des Temperaturfühlers (1) im Vergleich zu den Abmessungen des repräsentativen Bereichs (A) sehr gering. Durch das Vorsehen der wärmeleitenden Körper (5) wird jedoch der Temperaturmeßbereich des Temperaturfühlers (1) auf die Abmessung des repräsentativen Bereichs (A) erweitert. Zusätzlich ist, wie aus denselben Figuren hervorgeht, die Tiefe des wärmeleitenden Körpers (5) abhängig vom Ort in dem Luftkanal (3), um einerseits Wärmeverluste bei der Wärmeleitung von einem Ende des wärmeleitenden Körpers zu dem Temperaturfühler (1) zu kompensieren und um andererseits auch bestimmte empirisch ermittelte Ortsabhängigkeiten der Luftströmungsgeschwindigkeit und der Lufttemperatur zu kompensieren. Dabei kann, wie aus den Figuren 1 und 2 hervorgeht, ein derartiger wärmeaufnehmender und wärmeleitender Körper (5) vorgesehen sein. Es ist jedoch auch möglich, wie in den Figuren 3 bis 5 dargestellt, zwei derartige wärmeleitende Körper zu verwenden, wovon jeweils einer mit einem der wärmeaufnehmenden Anschlüsse des Temperaturfühlers (1) verbunden ist. Die Formgebung und die Außenabmessungen der Körper (5) kann dabei an die gegebenen Verhältnisse in dem Luftkanal (3) bzw. Luftstrom (2) angepaßt werden, wie insbesondere aus der unterschiedlichen Breite der Körper (5) in den Figuren 4 und 5 hervorgeht.

Die Dicke der wärmeleitenden Schicht von z. B. 0,4 mm ermöglicht erst den Wärmetransport über eine längere Wegstrecke. Die Schichtdicke normaler Leiterplatten von 50...70 µm ist dazu nicht in der Lage.

In Figur 4 sind Entlastungsbohrungen (24) im Träger (7) nahe bei dem Temperaturfühler (1) angebracht, die quer zur Längsachse des Träges (7) angeordnet sind und mechanische Spannungen am Temperaturfühler (1) vermeiden sollen.

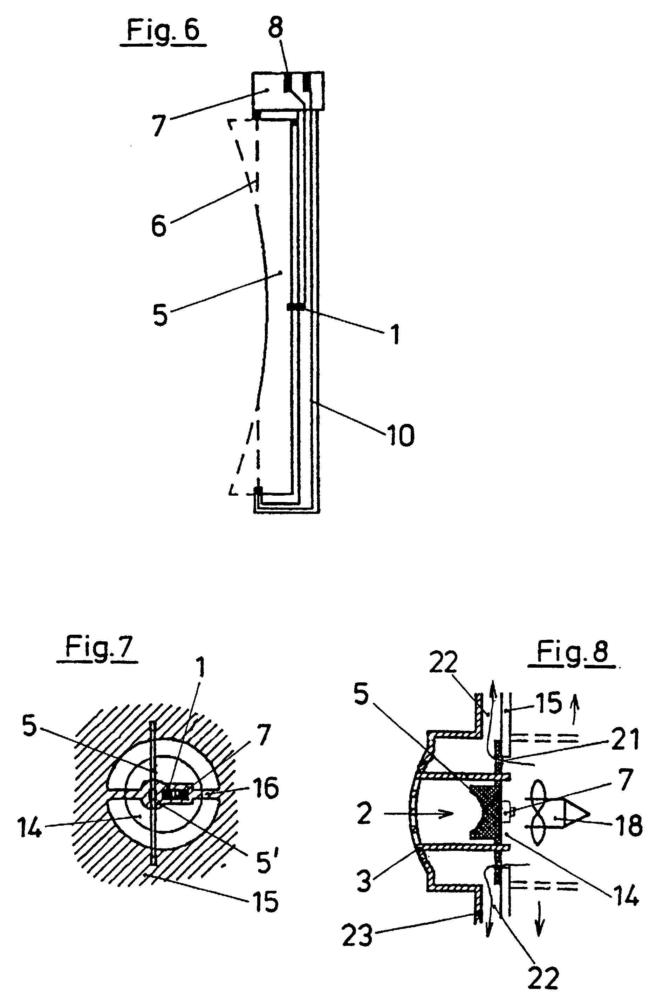

Aus der Figur 6 geht hervor, daß der wärmeaufnehmende und wärmeleitende Körper (5) auch ein in sich tragfähiges und die gesamte Anordnung tragendes Metallblech sein kann. Dabei weist der in der Figur 6 verwendete Körper (5) Abwinklungen (6) auf, die die räumliche Ausdehnung der Temperaturfühleranordnung gering halten. Der Temperaturfühler (1) ist dabei mit einem seiner wärmeaufnehmenden Anschlüsse direkt auf das Metallblech (5) aufgelötet. Als separater Träger (7) wird hier ein Anschlußbereich eines Steckers verwendet, der auch die elektrischen Anschlußflächen (8) und die elektrische Anschlußverdrahtung (10) trägt.

In den Figuren 7 und 8 ist eine Temperaturfühleranordnung dargestellt, bei der mehrere wärmeaufnehmende und wärmeleitende Körper (5, 5') verwendet werden. Diese Temperaturfühleranordnung ist Teil einer weitere Bauteile tragenden Leiterplatte (15) die ihrerseits Teil eines Bedienteiles für eine elektrische oder elektronische Heizungs- oder Klimaregelung eines Kraftfahrzeuges ist. Der separate Träger (7) ist hier durch eine zweite Freimachung (14) als Teil dieser weitere Bauteile tragenden Leiterplatte (15) ausgebildet. Der separate Träger (7) ist dabei über Leiterplattenstege (16), die durch die zweiten Freimachungen (14) verbleiben, mit der Leiterplatte (15) verbunden, wobei diese Leiterplattenstege (16) möglichst schmal gestaltet sind, um den Einfluß von Fremdwärme auf den Temperaturfühler (1) zu vermindern.

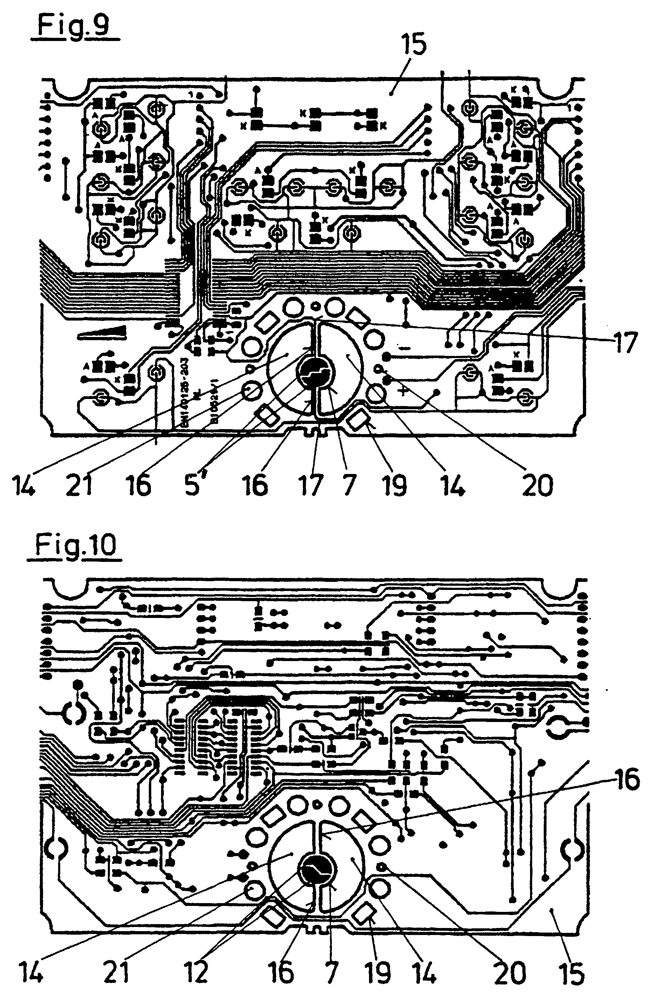

Dabei ist, wie beispielsweise aus den Figuren 9 und 10 hervorgeht, auf dem separaten Träger (7) eine Kupferkaschierung (5') vorgesehen, die einerseits der elektrischen Kontaktierung des Temperaturfühlers (1) über Anschlußleiterbahnen (17) dient. Diese Kupferkaschierung ist jedoch in ihrer Fläche soweit wie möglich vergrößert, um die gewünschte Wirkung als wärmeaufnehmende und wärmeleitende Körper zu erzielen. Wie vorher bereits erläutert, sind auf der Rückseite des separaten Trägers (7) ebenfalls zweite Körper mit den Außenabmessungen der ersten Körper (5') vorgesehen.

Zusätzlich zu dieser Kupferkaschierung (5') ist senkrecht auf der Kupferkaschierung (5') ein separates Metallblech als wärmeaufnehmender und wärmeleitender Körper (5) angeordnet. Die Kupferkaschierung (5') und der andere Körper (5) sind in bekannter Art und Weise miteinander verlötet.

Zur Herstellung des Luftstromes durch den Luftkanal (3) gemäß Figur 8 ist ein elektrisch betriebener Lüfter (18) vorgesehen, der ebenfalls handelsüblich erhältlich ist. Wie aus den Figuren 9 und 10 hervorgeht, ist der Lüfter (18) in Befestigungsöffnungen (19) durch eine Rastverbindung befestigt und mit der Leiterplatte (15) verbunden. Zusätzlich sind Lagefixierungsöffnungen (20) vorgesehen, die für die lagerichtige Verbindung des Lüfters (18) mit der Leiterplatte (15) sorgen.

Neben diesen Befestigungsöffnungen (19) und Lagefixierungsöffnungen (20) weist die Leiterplatte (15) die zweiten Freimachungen (14) umgebende zweite Öffnungen (21) auf, die, wie aus der Figur 8 hervorgeht, mit entsprechenden zweiten Luftkanälen (22) korrespondieren. Der erste Luftkanal (3) ist als Teil einer Bedienteilblende (23) des Bedienteiles zur Steuerung der elektrischen oder elektronischen Heizungs- oder Klimaregelung des Kraftfahrzeuges ausgebildet. Dabei sind die zweiten Luftkanäle (22) zwischen der Leiterplatte (15) und der Bedienteilblende (23) angeordnet und dienen zur zusätzlichen thermischen Entkopplung der Temperaturfühleranordnung von der Umgebung, insbesondere von der Umgebung der Bedienteilblende. Dabei kann bei entsprechender Luftführung des von dem Lüfter (18) erzeugten Luftstromes gewährleistet werden, daß der Luftstrom (2), wie in der Figur 8 dargestellt, über den Luftkanal (3) ein- und die Temperaturfühleranordnung anströmt und daß die Abführung der so angesaugten Luft radial am Umfang des Lüfters erfolgt und ein Teil der ausgeblasenen Luft durch die Öffnungen (21) in den Raum hinter der Blende (23) strömt. Auf diese Weise wird der Endbereich der den Temperaturfühler tragenden Stege thermisch von der umgebenden Leiterplatte (15) entkoppelt.

Wie aus den erläuterten Ausführungsbeispielen hinsichtlich der beanspruchten Temperaturfühleranordnung ersichtlich, kann die Erfindung also nicht nur für Temperaturfühleranordnungen verwendet werden, bei denen es um die herkömmliche Messung, beispielsweise einer Mischkammer oder einer Ausblastemperatur in einem Luftkanal geht. Es ist auch, wie aus den Figuren 7 bis 10 ersichtlich, die Erfindung bei Temperaturfühleranordnungen zu verwenden, die zur Messung der Innenraumtemperatur in Kraftfahrzeugen dienen. In jedem Fall kann ein einfacher handelsüblicher preiswert zu beschaffender Temperaturfühler in SMD-Technik verwendet werden, wobei die Anpassung an den Luftkanalquerschnitt durch Ausbildung der wärmeaufnehmenden und wärmeleitenden Körper mit einfachen konstruktiven Mitteln erfolgen kann.

### Bezugszeichenliste

### Temperaturfühleranordnung

- 1: Temperaturfühler, oberflächenmontierbarer temperaturabhängiger Widerstand
- 2: Luftstrom
- 3: Luftkanal
- 4: Anschlußbereiche
- 5: Körper
- 5': Kupferkaschierung
- 6: Abwinklungen
- 7: Träger
- 8: elektrische Anschlußflächen
- 9: Durchkontaktierung
- 10: elektrische Anschlußverdrahtung
- 11: Zwischenanschlußfläche
- 12: zweiter Körper
- 13: schlitzförmige Freimachung
- 14: zweite Freimachung
- 15: Leiterplatte (Blenden-Leiterplatte)
- 16: Leiterplattensteg
- 17: Anschlußleiterbahn
- 18: Lüfter
- 19: Befestigungsöffnungen
- 20: Lagefixierungsöffnungen
- 21: zweite Öffnungen
- 22: zweiter Luftkanal
- 23: Bedienteilblende
- 24: Entlastungsbohrungen

- T: Tiefe des Körpers
- A: Abmessungen des repräsentativen Bereichs
- a: Außenabmessungen des Temperaturfühlers (1)

## Patentansprüche

1. Temperaturfühleranordnung für einen Luftstrom in Heizungs- und/oder Klimaanlagen von Kraftfahrzeugen,
mit einem Kanal und einem in dem Kanal angeordneten Temperaturfühler,
wobei der Luftstrom im Kanal geführt ist, in dem unterschiedliche Strömungsgeschwindigkeiten und Temperaturen an verschiedenen Stellen des Kanalquerschnitts auftreten,
und wobei die Temperaturfühleranordnung den Mittelwert der Lufttemperatur im Kanalquerschnitt erfaßt,
**dadurch gekennzeichnet,**
- **daß** der Temperaturfühler (1) ein oberflächenmontierbares Bauelement in SMD-Technik ist,
- **daß** die Außenabmessungen (a) des Temperaturfühlers (1) sehr gering im Vergleich zur Breite des Kanalquerschnitts (A) sind,
- **daß** der Temperaturfühler elektrische Anschlußbereiche (4) aufweist, die zugleich wärmeleitend ausgebildet sind, und die durch eine Lötverbindung oder eine leitfähige Klebeverbindung mit einem oder zwei wärmeaufnehmenden und wärmeleitenden Körper(n) (5) im Luftkanal (3) wärmeleitend verbunden sind und
- **daß** sich entweder der eine wärmeleitende Körper (5) im wesentlichen von einer Seitenwand des Kanals bis zu dessen gegenüberliegender Seitenwand erstreckt, oder der erste wärmeleitende Körper sich von einer Seitenwand des Kanals bis zu einem Anschlußbereich des Temperaturfühlers erstreckt und der zweite wärmeleitende Körper sich vom dem anderen Anschlußbereich des Temperaturfühlers bis zur gegenüberliegenden Seitenwand des Kanals erstreckt.

2. Temperaturfühleranordnung nach Anspruch 1, **dadurch gekennzeichnet, daß** jeder wärmeaufnehmende und wärmeleitende Körper (5) ein Metallblech ist.

3. Temperaturfühleranordnung nach Anspruch 1, **dadurch gekennzeichnet, daß** jeder wärmeleitende Körper (5) in Richtung des Luftstroms (2) eine veränderliche Tiefe (T) aufweist.

4. Temperaturfühleranordnung nach Anspruch 1, **dadurch gekennzeichnet, daß** jeder wärmeleitende Körper (5) eine in Richtung des Luftstromes (2) mit der Entfernung vom Temperaturfühler (1) zunehmende Tiefe (T) aufweist.

5. Temperaturfühleranordnung nach Anspruch 4, **dadurch gekennzeichnet, daß** die Tiefe (T) jedes wärmeleitenden Körpers (5) gegenüber der Entfernung vom Temperaturfühler (1) überproportional zunimmt.

6. Temperaturfühleranordnung nach Anspruch 1, **dadurch gekennzeichnet, daß** jeder wärmeleitende Körper (5) zugleich der Träger der Temperaturfühleranordnung ist.

7. Temperaturfühleranordnung nach Anspruch 2, **dadurch gekennzeichnet, daß** das Metallblech zumindest teilweise abgewinkelt ist.

8. Temperaturfühleranordnung nach Anspruch 1, **dadurch gekennzeichnet, daß** jeder Körper (5) gemeinsam mit dem Temperaturfühler (1) auf einem separaten elektrisch und thermisch isolierenden Träger (7) angeordnet ist.

9. Temperaturfühleranordnung nach Anspruch 2 und Anspruch 8, **dadurch gekennzeichnet, daß** der Träger (7) aus Leiterplattenbasismaterial, insbesondere glasfaserverstärktem Epoxydharz besteht und daß das Metallblech eine insbesondere 0,4 mm starke Kupferkaschierung (5') des Trägers (7) ist.

10. Temperaturfühleranordnung nach einem oder mehreren der vorhergehenden Ansprüche, **dadurch gekennzeichnet, daß** jeder Träger (7) zwischen jedem Körper (5) und/oder Temperaturfühler (1) und Anschlußflächen (8) eine schlitzförmige Freimachung (13) aufweist.

11. Temperaturfühleranordnung nach einem oder mehreren der vorhergehenden Ansprüche, **dadurch gekennzeichnet, daß** der separate Träger (7) durch mindestens eine zweite Freimachung (14) als Teil einer weitere Bauelemente tragenden Leiterplatte (15) gebildet ist.

12. Temperaturfühleranordnung nach Anspruch 11, **dadurch gekennzeichnet, daß** ein verbleibender Leiterplattensteg (16) die elektrischen Anschlußleiterbahnen (17) des Temperaturfühlers (1) trägt.

13. Temperaturfühleranordnung nach Anspruch 11, **dadurch gekennzeichnet, daß** ein elektrisch betriebener Lüfter (18) vorgesehen ist, der den Luftstrom (2) im Kanal (3) erzeugt.

14. Temperaturfühleranordnung nach Anspruch 13, **dadurch gekennzeichnet, daß** der Lüfter (18) in Öffnungen (19, 20) der Leiterplatte (15) lagerichtig befestigt ist.

15. Temperaturfühleranordnung nach Anspruch 11, **dadurch gekennzeichnet, daß** weitere die zweite Freimachung (14) umgebende Öffnungen (21) in der Leiterplatte (15) angeordnet sind.

16. Temperaturfühleranordnung nach einem oder mehreren der vorhergehenden Ansprüche, **dadurch gekennzeichnet, daß** der Kanal (3) als Teil einer Bedienteilblende (23) einer elektrisch geregelten Heizungs- und Klimaanlage ausgebildet ist.

17. Temperaturfühleranordnung nach Anspruch 15 und Anspruch 16, **dadurch gekennzeichnet, daß** den weiteren Öffnungen (21) ein zweiter Luftkanal (22) zugeordnet ist, der zwischen der Leiterplatte (15) und der Bedienteilblende (23) angeordnet ist.

18. Temperaturfühleranordnung nach einem oder mehreren der vorhergehenden Ansprüche, **dadurch gekennzeichnet, daß** der Temperaturfühler (1) durch eine elektrisch isolierende Abdeckung, insbesondere einen Lacktropfen, überdeckt und geschützt ist.

19. Temperaturfühleranordnung nach einem oder mehreren der vorhergehenden Ansprüche, **dadurch gekennzeichnet, daß** die Temperaturfühleranordnung insgesamt mit einer elektrisch isolierenden, thermisch gut leitenden Schutzschicht, insbesondere einem Tauchlack, überdeckt ist.

20. Temperaturfühleranordnung nach einem oder mehreren der vorhergehenden Ansprüche, **dadurch gekennzeichnet, daß** Entlastungsbohrungen (24) oder -schlitze in Träger (7), insbesondere quer zur Längsachse des Trägers (7), nahe bei dem Temperaturfühler (1) angebracht sind.

## Claims

1. Temperature sensor arrangement for an airflow in heating or air-conditioning units of motor vehicles,
comprising a channel and a temperature sensor arranged within the channel, and
the airflow is ducted in the channel where different flow speeds and temperatures develop at different points of the channel cross-section, and
the temperature sensor arrangement detects the mean value of air temperature in the channel cross-section,
**characterised in that**
□ the temperature sensor (1) is a surface mountable module in SMD technique;
□ the outside dimensions (a) of the temperature sensor (1) are very small as compared to the width of the channel cross-section (A);
□ the temperature sensor comprises electrical connecting areas (4) which are also designed to be heat ducting and heat-ductingly connected by a solder joint or a ducting glue joint to one or two heat absorbing and heat ducting body/bodies (5) in the air channel (3); and
□ either the one heat ducting body (5) extends substantially from a side wall of the channel up to its opposite side wall, or the first heat ducting body extends from one side wall of the channel up to its connecting area of the temperature sensor, and the second heat ducting body extends from the other connecting area of the temperature sensor up to the opposite side wall of the channel.

2. Temperature sensor arrangement according to Claim 1, **characterised in that** each heat absorbing and heat ducting body (5) is a metal sheet.

3. Temperature sensor arrangement according to Claim 1, **characterised in that** each heat ducting body (5) has an adjustable depth (T) in the direction of the airflow (2).

4. Temperature sensor arrangement acording to Claim 1, **characterised in that** each heat ducting body (5) has a depth (T) which increases in the direction of the airflow (2) with distance from the temperature sensor (1).

5. Temperature sensor arrangement according to Claim 4, **characterised in that** the depth (T) of each heat ducting body (5) increases above proportion relative to the distance from the temperature sensor (1).

6. Temperature sensor arrangement according to Claim 1, **characterised in that** each heat ducting body (5) is at the same time the carrier of the temperature sensor arrangement.

7. Temperature sensor arrangement according to Claim 2, **characterised in that** the metal sheet is at least partially angled off.

8. Temperature sensor arrangement according to Claim 1, **characterised in that** each body (5) is together with the temperature sensor (1) arranged on a separate electrically and thermally insulating carrier (7).

9. Temperature sensor arrangement according to Claim 2 and Claim 8, **characterised in that** the carrier (7) is made of circuitboard base material, in particular fibreglass reinforced epoxy resin, and the metal sheet is a copper lamination (5') of the carrier (7) of in particular 0.4 mm thickness.

10. Temperature sensor arrangement according to one of more of the above claims, **characterised in that** each carrier (7) has between each body (5) and/or temperature sensor (1) and connecting surfaces (8) a slotted free area (13).

11. Temperature sensor arrangement according to one of more of the above claims, **characterised in that** the separate carrier (7) is established by at least a second free area (14) as part of a further circuitboard (15) which carries additional assembly elements.

12. Temperature sensor arrangement according to Claim 11, **characterised in that** a remaining circuitboard web (16) carries the electrically ducting conductor tracks (17) of the temperature sensor (1).

13. Temperature sensor arrangement according to Claim 11, **characterised in that** an electrically operated ventilator (18) is provided which produces the airflow (2) in the channel (3).

14. Temperature sensor arrangement according to Claim 13, **characterised in that** the ventilator (18) is mounted in appropriate orientation in openings (19, 20) of the circuitboard (15).

15. Temperature sensor arrangement according to Claim 11, **characterised in that** additional openings (21) which surround the second free area (14) are arranged in the circuitboard (15).

16. Temperature sensor arrangement according to one or more of the above claims, **characterised in that** the channel (3) is designed as a part of an operating diaphragm portion (23) of an electrically regulated heating and air-conditioning unit.

17. Temperature sensor arrangement according to Claim 15 and Claim 16, **characterised in that** the additional openings (21) are associated with a second air channel (22) which is arranged between the circuitboard (15) and the operating diaphragm portion (23).

18. Temperature sensor arrangement according to one or more of the above claims, **characterised in that** the temperature sensor (1) is covered and protected by an electrically insulating cover, in particular a varnish drop.

19. Temperature sensor arrangement according to one or more of the above claims, **characterised in that** the temperature sensor arrangement is in its entirety covered with an electrically insulating, thermally well ducting protective coating, in particular a dipping varnish.

20. Temperature sensor arrangement according to one or more of the above claims, **characterised in that** the relief bores (24) or relief slots are accommodated in the carrier (7) near the temperature sensor (1), in particular transversely to the longitudinal axis of the carrier (7).

## Revendications

1. Dispositif de capteur de température pour un courant d'air dans des installations de chauffage et/ou de climatisation de véhicules, équipé d'un canal et d'un capteur de température disposé dans le canal,
le courant d'air étant guidé dans le canal, dans lequel appariassent différentes vitesses d'écoulement et de température en différents points de la section du canal, et
le dispositif de capteur de température détectant la valeur moyenne de la température de l'air dans la section du canal,
**caractérisé**
- **en ce que** le capteur de température (1) est un composant pouvant être monté en surface selon la technique CMS,
- **en ce que** les dimensions extérieures (a) du capteur de température (1) sont très petites en comparaison de la largeur de la section du canal (A),
- **en ce que** le capteur de température présente des régions de raccordement électrique (4), qui sont également conductrices de chaleur, et qui sont réunies de façon conductrice de la chaleur par une liaison par soudure ou une liaison par colle conductrice avec un ou deux corps (5) absorbant la chaleur et conduisant la chaleur dans le canal d'air (3) et
- **en ce que**, soit le premier corps (5) conduisant la chaleur s'étend sensiblement d'une paroi latérale du canal jusqu'à la paroi latérale en vis-à-vis de celui-ci, soit le premier corps conduisant la chaleur s'étend depuis une paroi latérale du canal jusqu'à une région de raccordement du capteur de température et le second corps conduisant la chaleur s'étend depuis l'autre région de raccordement du capteur de température jusqu'à la paroi latérale en vis-à-vis du canal.

2. Dispositif de capteur de température selon la revendication 1, **caractérisé en ce que** chaque corps absorbant la chaleur et conduisant la chaleur (5) est une tôle métallique.

3. Dispositif de capteur de température selon la revendication 1, **caractérisé en ce que** chaque corps conduisant la chaleur (5) présente une profondeur (T) variable dans la direction du courant d'air (2).

4. Dispositif de capteur de température selon la revendication 1, **caractérisé en ce que** chaque corps conduisant la chaleur (5) présente une profondeur (T) croissant avec l'éloignement du capteur de température (1) dans la direction du courant (2).

5. Dispositif de capteur de température selon la revendication 4, **caractérisé en ce que** la profondeur (T) de chaque corps conduisant la chaleur (5) croît de façon surproportionnée vis-à-vis de l'éloignement du capteur de température (1).

6. Dispositif de capteur de température selon la revendication 1, **caractérisé en ce que** chaque corps conduisant la chaleur (5) est simultanément le support du dispositif de capteur de température.

7. Dispositif de capteur de température selon la revendication 2, **caractérisé en ce que** la tôle métallique est coudée au moins partiellement.

8. Dispositif de capteur de température selon la revendication 1, **caractérisé en ce que** chaque corps (5) est disposé conjointement avec le capteur de température (1) sur un support (7) isolant électriquement et thermiquement distinct.

9. Dispositif de capteur de température selon la revendication 1 et la revendication 8, **caractérisé en ce que** le support (7) se compose d'un matériau à base de plaquette de circuit imprimé, en particulier de résine époxy renforcée à l'aide de fibres de verre et **en ce que** la tôle métallique est un revêtement de cuivre (5') en particulier de 0,4 mm d'épaisseur.

10. Dispositif de capteur de température selon une ou plusieurs des revendications précédentes, **caractérisé en ce que** chaque support (7) présente entre chaque corps (5) et/ou le capteur de température (1) et les surfaces de raccordement (8) un dégagement (13) sous forme de fente.

11. Dispositif de capteur de température selon une ou plusieurs des revendications précédentes, **caractérisé en ce que** le support distinct (7) est formé par au moins un second dégagement (14) en tant que partie d'une plaquette de circuit imprimée (15) portant d'autres composants.

12. Dispositif de capteur de température selon la revendication 11, **caractérisé en ce qu'**une nervure de plaquette de circuit imprimé (16) subsistante forme les pistes conductrices de raccordement électrique (17) du capteur de température (1).

13. Dispositif de capteur de température selon la revendication 11, **caractérisé en ce qu'**un ventilateur (18) mû électriquement est prévu, qui génère le courant d'air (2) dans le canal (3).

14. Dispositif de capteur de température selon la revendication 13, **caractérisé en ce que** le ventilateur (18) est fixé en position correcte dans des ouvertures (19, 20) de la plaquette de circuit imprimé (15).

15. Dispositif de capteur de température selon la revendication 11, **caractérisé en ce que** d'autres ouvertures (21) entourant le second dégagement (14) sont pratiquées dans la plaquette de circuit imprimé (15).

16. Dispositif de capteur de température selon une ou plusieurs des revendications précédentes, **caractérisé en ce que** le canal (3) est réalisé en tant que partie d'un écran de pièce de commande (23) d'une installation de chauffage et de climatisation régulée électriquement.

17. Dispositif de capteur de température selon la revendication 15 et la revendication 16, **caractérisé en ce qu'**à d'autres ouvertures (21) est associé un second canal d'air (22), qui est disposé entre la plaquette de circuit imprimé (15) et l'écran de commande (23).

18. Dispositif de capteur de température selon une ou plusieurs des revendications précédentes, **caractérisé en ce que** le capteur de température (1) est recouvert et protégé par un recouvrement électriquement isolant, en particulier une laque.

19. Dispositif de capteur de température selon une ou plusieurs des revendications précédentes, **caractérisé en ce que** le dispositif de capteur de température est recouvert en totalité par une couche de protection électriquement isolante, bonne conductrice de la chaleur, en particulier un vernis à immersion.

20. Dispositif de capteur de température selon une ou plusieurs des revendications précédentes, **caractérisé en ce que** des alésages de délestage (24) ou des fentes sont pratiqués dans le support (7) en particulier perpendiculairement à l'axe longitudinal du support (7), près du capteur de température (1).
